# FASCICULE DE BREVET EUROPEEN

(11) **EP 0 503 994 B1**
(45) Date de publication et mention de la délivrance du brevet: **24.05.1995**
(21) Numéro de dépôt: 92400512.7
(22) Date de dépôt: 27.02.1992
(51) Int. Cl.: B01D 36/02, B01D 29/03, B01D 29/44, B01D 29/64, B01D 33/04

(54) **Appareil compact de traitement des boues par egouttage et pressage**
Kompakte Vorrichtung zur Entwässerung und zum Ausdrücken von Schlämmen
Compact apparatus for dewatering and squeezing sludges

(30) Priorité: 13.03.1991 FR 9103037
(43) Date de publication de la demande: 16.09.1992
(73) Titulaire: DEGREMONT S.A., F-92508 Rueil-Malmaison Cédex (FR)
(72) Inventeur: Delons, Luc, F-92500 Rueil Malmaison (FR); Bele, Patrick, F-78100 Saint Germain en Laye (FR); Andrieu, Joseph, F-78140 Velizy (FR)
(74) Mandataire: Armengaud Ainé, Alain

(56) Documents cités:
- EP-A- 0 023 899
- AT-A- 386 819
- GB-A- 1 545 250
- GB-A- 2 235 393
- US-A- 1 669 973

## Description

La présente invention est relative à un appareil de traitement des boues, destiné plus particulièrement à réaliser la séparation solide-liquide et permettant notamment d'épaissir et de déshydrater des boues provenant de stations d'épuration d'eau.

On sait que le traitement des boues, provenant des stations d'épuration d'eau, est communément réalisé par déshydratation sur filtre à bandes, cette déshydratation étant précédée d'un épaississement qui est réalisé dans un réservoir qui peut être soit statique soit légèrement agité.

La présente titulaire a développé, au cours des dernières années, une grille d'égouttage qui doit être lavée périodiquement à contre-courant, cette grille d'égouttage ayant fait l'objet du brevet français 85 07026, déposé le 9 mai 1985 et publié sous le numéro FR-A-2 564 637. Cette grille d'égouttage qui vient en remplacement de l'épaississeur, permet de réaliser des ateliers de déshydratation moins encombrants, plus faciles à désodoriser et, par conséquent, moins chers.

Afin de limiter les ateliers de déshydratation, on a été amené à accoler la grille d'égouttage et le filtre à bandes, pour former des machines uniques, les boues diluées entrant côté grille et ressortant après pressage entre les bandes du filtre, sous la forme de "gâteaux" déshydratés. Toutefois, un tel dispositif présente une compacité limitée, étant donné que la grille d'égouttage nécessite un lavage par projection d'eau à contre-courant (de bas en haut). Dans une telle installation connue, il est donc impossible de disposer la partie grille au-dessus de la partie bandes presseuses du filtre, la hauteur nécessaire à la mise en place du système de lavage à contre-courant sous la grille imposant une hauteur excessive entre cette grille et la bande presseuse, ce qui a pour conséquence la destruction de la boue floculée avec des polymères, lorsque cette boue chute de la grille à la bande.

On connait (GB-A-1 545 250, EP-A-0 023 899 et GB-A-2 235 393) des appareils de déshydratation de boues, provenant de stations d'épuration d'eau, qui comportent une partie grille d'égouttage, positionnée au-dessus d'une partie filtre à bandes presseuses. En outre, GB-A-1 545 250 décrit un dispositif de lavage de grille d'égouttage.

La présente invention se propose d'éliminer les inconvénients des solutions selon la technique antérieure rappelée ci-dessus en apportant un appareil de deshydratation de boues, provenant notamment de stations d'épuration d eau, comprenant une partie grille d'égouttage positionnée au-dessus d une partie filtre à bandes presseuses, et un dispositif de lavage de grille par pulvérisation d'eau caractérisé en ce qu'il comporte :
- une série de racleurs au contact de la grille, entrainés par un mécanisme à chaines sur lequel ils sont fixés, et en ce que, afin de limiter la hauteur de chute de la boue floculée entre ladite grille et la bande,
- le dispositif de lavage fonctionnant à co-courant du déplacement des boues sur la grille, est constitué d'une rampe de lavage mobile montée au-dessus de la grille, munie d'une pluralité de gicleurs orientés vers le bas, ladite rampe étant entrainée selon un mouvement de translation horizontale alternatif, par l'intermédiaire dudit mécanisme à chaines.

Ainsi l'invention rend possible la superposition de la grille d'égouttage et de la partie bandes presseuses du filtre, en créant un système de lavage non plus à contre-courant, mais à co-courant, dans une zone définie à cet effet, permettant alors de créer une continuité hydraulique entre la partie grille et la partie bandes, qui soit compatible avec la floculation des boues, même les plus fragiles.

Selon un mode de réalisation préféré de la présente invention, ladite rampe mobile est positionnée entre deux racleurs rapprochés et elle est entraînée entre deux butées d'extrémité à l'aide de lames-ressorts solidaires desdits racleurs et déplacées à l'aide du mécanisme à chaînes sans fin, entraînant les racleurs de la grille d'égouttage.

D'autres caractéristiques et avantages de la présente invention ressortiront de la description faite ci-après, en référence aux dessins annexés, qui en illustrent un exemple de réalisation dépourvu de tout caractère limitatif. Sur les dessins :
- la figure 1 est une vue d'ensemble en élévation latérale d'un appareil de traitement des boues, selon la présente invention ;
- la figure 2 est une vue partielle, en élévation latérale, représentant en détail les moyens prévus par l'invention pour réaliser le lavage de la grille d'égouttage ;
- la figure 3 est une vue en plan de la figure 2 et ;
- la figure 4 est une vue en élévation frontale de la rampe de lavage de la grille d'égouttage.

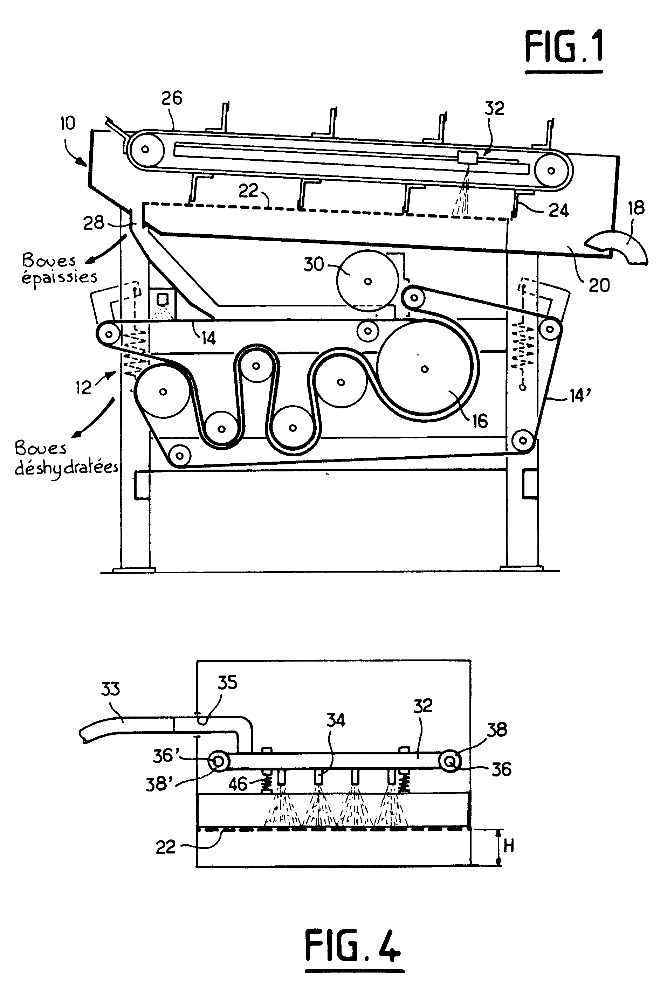

En se référant à la figure 1, on voit que l'appareil, selon la présente invention, comprend d'une façon générale une partie grille d'égouttage, désignée dans son ensemble par la référence 10 et d'un module de pressage, désigné dans son ensemble par la référence 12. Ce module de pressage est du type double toile classique et il comprend essentiellement des toiles filtrantes 14, 14′ passant sur des rouleaux de pressage, tels que 16 et entraînées par un moto-variateur (non représenté sur le dessin). Cette partie de la machine étant bien connue par ailleurs, elle ne sera pas décrite ici.

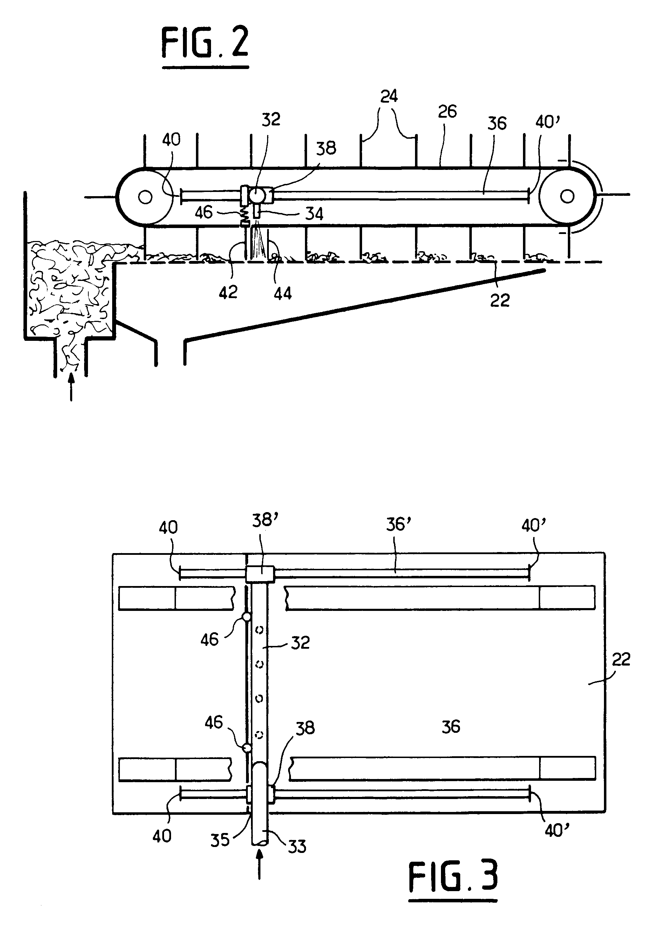

La boue à traiter est introduite avec le polyélectrolyte par l'intermédiaire d'une tuyauterie 18, qui alimente le bac de répartition 20. La boue déborde ensuite sur la grille d'égouttage 22, qu'elle parcourt sous la poussée d'une série de racleurs, tels que 24 qui sont entraînés par une double chaîne 26 sur laquelle ils sont fixés, comme on le voit clairement sur les figures 1 et 2. L'eau intersticielle s'écoule au travers de la grille 22 et la séparation de la boue et de l'eau est favorisée par la constitution de rouleaux de boues tournant sur eux-mêmes sur la grille 22, lors du déplacement des racleurs 24.

A l'extrémité de la grille, la boue se déverse sur la toile filtrante 14, qui la conduit vers la zone de pressage à l'aide d'un déflecteur 28, le plan de la grille 22 et le plan de la toile supérieure 14 de la partie presse étant alors au plus près l'un de l'autre, n'étant plus séparés par le système de lavage, étant donné que celui-ci, selon l'invention, est situé au-dessus de la grille. Après passage sous un rouleau de compactage 30, la boue est alors prise entre les deux toiles 14 et 14′ du filtre à bandes presseuses 12 qui, ainsi que précisé ci-dessus, fait partie de l'art antérieur et ne sera pas décrit ici.

La grille 22 est lavée périodiquement à l'aide d'une rampe mobile garnie de buses et sans arrêt de l'alimentation de boues. Le système de lavage de grille, prévu par la présente invention, est illustré de façon détaillée par les figures 2 à 4, auxquelles on se réfère maintenant.

La rampe de lavage 32 est donc munie d'une pluralité de gicleurs en forme de buses 34, orientées vers le bas et cette rampe peut se déplacer d'un mouvement de translation horizontale alternative, en coulissant par l'intermédiaire de deux guides 38, 38′ le long de deux tubes de guidage 36, 36′, munis de butées 40, 40′ à chacune de leurs extrémités. Par ailleurs, la chaîne 26 qui porte les racleurs 24 comprend deux racleurs rapprochés 42, 44 entre lesquels est placée la rampe mobile 32. Ces racleurs 42, 44 sont munis de lames-ressorts, telles que 46, dont l'une des extrémités s'applique sur la rampe 32. La présence de ces lames-ressorts permet de réaliser l'entraînement de la rampe mobile de lavage 32, selon le déplacement mentionné ci-dessus.
L'alimentation de la rampe mobile en eau sous pression est réalisée à l'aide d'un tuyau flexible 33, qui se déplace dans une lumière 35 prévue dans l'une des parois latérales de l'appareil.

Au passage des racleurs 42, 44, les lames-ressorts 46 poussent la rampe 32 depuis la position limitée par les butées 40 jusqu'à la position délimitée par les butées 40′. A cet endroit, les lames-ressorts 46 échappent au-dessous de la rampe 32, étant donné que cette dernière est en butée et elles reprennent la poussée de la rampe 32, au-dessus de cette dernière lors du déplacement du brin supérieur de la chaîne 26, en sens inverse des butées 40′ aux butées 40. Lorsque la rampe 32 arrive sur les butées 40, les lames-ressorts 46 échappent à nouveau, le temps de revenir à la position de poussée initiale, telle que représentée sur la figure 2.

Selon l'invention, on prévoit deux contacts, électriques ou pneumatiques, à l'emplacement des butées d'extrémité 40, 40′, afin de commander une vanne automatique assurant l'alimentation de la rampe en eau sous pression, lorsque cette rampe se déplace des butées 40 vers les butées 40′ et d'arrêter l'alimentation en eau, lorsque la rampe arrive sur les butées 40′. Le lavage de la grille 22 s'effectue donc par dessus, entre les racleurs 42, 44, entraînant une très faible quantité de boues qui a été emprisonnée entre ces deux racleurs.

La disposition rapprochée des deux racleurs 42, 44 présente deux avantages :
- d'une part, elle augmente l'efficacité du lavage par concentration sur une surface limitée de l'énergie d'eau de lavage et ;
- d'autre part, la dilution provoquée par l'eau de lavage n'affecte qu'une très faible quantité de boues comprise entre ces deux racleurs.

On remarquera, en particulier sur la figure 4, que la hauteur H sous la grille 22 peut être très faible, cette hauteur étant uniquement dimensionnée pour assurer l'écoulement de l'eau d'égouttage. C'est cette faible hauteur qui permet de faire passer la boue de la zone d'égouttage à la zone de pressage, sans altérer la structure de la boue floculée avec les polymères.

Par ailleurs, selon un mode de réalisation préféré de l'invention, on superpose en position tête bêche la grille 10 et le filtre à double toile 12 (voir la figure 1), ce qui permet de placer l'une au-dessus de l'autre, les sorties boues épaissies sur grille et boues déshydratées. Il devient alors particulièrement simple, par inversion du déflecteur 28 par exemple, de reprendre avec le même appareil (pompe, vis et similaires), la boue épaissie ou la boue déshydratée, en fonction de la désignation finale du produit.

Il demeure bien entendu que la présente invention n'est pas limitée aux exemples de réalisation décrits et/ou représentés ici mais qu'elle en englobe toutes les variantes.

## Revendications

1. Appareil de deshydratation de boues, provenant notamment de stations d'épuration d'eau, comprenant une partie grille d'égouttage positionnée au-dessus d'une partie filtre à bandes presseuses, et un dispositif de lavage de grille par pulvérisation d'eau caractérisé en ce qu'il comporte :
- une série de racleurs (24) au contact de la grille (22), entrainés par un mécanisme à chaines (26) sur lequel ils sont fixés, et en ce que, afin de limiter la hauteur de chute de la boue floculée entre ladite grille (22) et la bande (14,14'),
- le dispositif de lavage fonctionnant à co-courant du déplacement des boues sur la grille, est constitué d'une rampe de lavage mobile (32) montée au-dessus de la grille, munie d'une pluralité de gicleurs (34) orientés vers le bas, ladite rampe étant entrainée selon un mouvement de translation horizontale alternatif, par l'intermédiaire dudit mécanisme à chaines (26).

2. Appareil selon la revendication 1 caractérisé en ce que ladite rampe mobile (32) est positionnée entre deux racleurs rapprochés (42,44) et elle est entraînée entre deux butées d'extrémité (40, 40') à l'aide de lames-ressorts (46) solidaires desdits racleurs et déplacées à l'aide du mécanisme à chaînes sans fin (26) entraînant les racleurs de la grille d'égouttage.

3. Appareil selon l'une quelconque des revendications précédentes, caractérisé en ce que la rampe de lavage (32) est guidée lors de son déplacement par des moyens (38, 38'), coulissant sur des tubes de guidage (36, 36'), comportant lesdites butées (40, 40') à leurs extrémités.

4. Appareil selon l'une quelconque des revendications précédentes, caractérisé en ce que l'on prévoit des contacts électriques ou pneumatiques, à l'emplacement desdites butées (40, 40'), de façon à commander une vanne automatique assurant l'alimentation en eau sous pression de la rampe de lavage 32, lorsque celle-ci quitte l'une des butées d'extrémité (40) et d'arrêter cette alimentation lorsque cette rampe arrive sur l'autre butée (40').

5. Appareil selon l'une quelconque des revendications précédentes, caractérisé en ce que la partie grille d'égouttage (10) et la partie filtre à bandes presseuses (12) sont montées tête bêche de manière à permettre, par une simple inversion d'une goulotte, de sortir en un même emplacement, soit des boues simplement épaissies, soit des boues déshydratées.

## Claims

1. Apparatus for drying sludge originating, notably, from water purification plants, the apparatus comprising a draining grating section positioned over a band filter press section, and a device for washing the grating by atomizing water, characterized in that it comprises:
- a series of scrapers (24) in contact with the grating (22), and driven by a chain mechanism (26), to which they are fixed, and in that, in order to limit the height of fall of the flocculated sludge from said grating (22) to the band (14, 14'),
- the washing device, operating in parallel flow to the displacement of the sludge on the grating, is constituted of a movable washing spray pipe (32) mounted above the grating, equipped with a plurality of downwardly orientated spray nozzles (34), said spray pipe being entrained in a horizontal alternating translatory movement by means of said chain mechanism (26).

2. Apparatus according to Claim 1, characterized in that said movable spray pipe (32) is positioned between two closely spaced scrapers (42, 44) and it is driven between two end stops (40, 40') by means of spring strips (46) fixed to said scrapers and moved by means of the endless chain mechanism (26) which drives the scrapers of the draining grating.

3. Apparatus according to any one of the preceding Claims, characterized in that the washing spray pipe (32) is guided during its movement by means (38, 38') sliding on guide tubes (36, 36') comprising said stops (40, 40') at their ends.

4. Apparatus according to any one of the preceding Claims, characterized in that electrical or pneumatic contacts are provided, at the location of said stops (40, 40'), in such a way as to actuate an automatic valve assuring the supply of pressurized water to the washing spray pipe (32) when this pipe leaves one of the end stops (40) and to stop said supply when said spray pipe arrives at the other stop (40').

5. Apparatus according to any one of the preceding Claims, characterized in that the draining grating section (10) and the band filter press section (12) are mounted head-to-tail in such a way as to allow, by a simple inversion of a spout, either simply thickened sludge or dehydrated sludge to leave at the same location.

## Patentansprüche

1. Vorrichtung zur Entwässerung von insbesondere aus Abwasserkläranlagen stammenden Schlämmen mit einem über einem Pressbandfilterbereich angeordneten Abtropfrostbereich und einer Vorrichtung zum Waschen des Rostes durch Zerstäubung von Wasser,
dadurch **gekennzeichnet,**
daß sie eine Reihe von Schildräumern (24) aufweist, die in Kontakt mit dem Rost (22) stehen und die von einem Kettentriebmechanismus (26) angetrieben sind, auf dem sie befestigt sind, und daß, um die Fallhöhe des ausgeflockten Schlamms zwischen dem Rost (22) und dem Band (24, 24') zu begrenzen, die Waschvorrichtung, die in gleicher Richtung wie der der Verschiebung der Schlämme auf dem Rost arbeitet, aus einer beweglichen, über dem Rost montierten, mit einer Vielzahl von nach unten gerichteten Spritzdüsen (34) versehenen Waschrampe (32) gebildet ist, die durch den Kettentriebmechanismus (26) in einer horizontalen Translationsbewegung hin- und hergeschoben wird.

2. Vorrichtung nach Anspruch 1,
dadurch **gekennzeichnet,**
daß die bewegliche Rampe (32) zwischen zwei näher zueinander angeordneten Schildräumern (42,44) angeordnet ist und zwischen zwei Endanschlägen (40,40') mit Hilfe von Federn (46) angetrieben ist, die mit diesen Schildräumern verbunden sind und mit Hilfe des Endloskettentriebes (26) verschoben werden, der die Schildräumer des Abtropfrosts antreibt.

3. Vorrichtung nach einem der vorhergehenden Ansprüche,
dadurch **gekennzeichnet,**
daß die Waschrampe (32) bei ihrer Verschiebung durch Mittel (38,38') geführt wird, die auf Führungsrohren (36,36') mit den Endanschlägen (40,40') an ihren Enden gleiten.

4. Vorrichtung nach einem der vorhergehenden Ansprüche,
dadurch **gekennzeichnet,**
daß elektrische oder pneumatische Kontakte bei den Endanschlägen (40,40') derart vorgesehen sind, daß ein automatisches Ventil gesteuert wird, das die Versorgung der Waschrampe (32) mit Druckwasser gewährleistet, wenn diese einen der Endanschläge (40) verläßt, und das die Versorgung einstellt, wenn diese Rampe am anderen Endanschlag (40') anlangt.

5. Vorrichtung nach einem der vorhergehenden Ansprüche,
dadurch **gekennzeichnet,**
daß der Abtropfrostbereich (10) und der Pressbandfilterbereich (12) derart gegeneinander verkehrt Kopf bei Fuß liegend montiert sind, daß man durch einfaches Umdrehen einer Rutsche an der gleichen Stelle entweder einfach verdickte Schlämme oder entwässerte Schlämme austreten lassen kann.
